Europäisches Patentamt

European Patent Office

Office européen des brevets

(11) Publication number: **0 413 521 A1**

# EUROPEAN PATENT APPLICATION

(21) Application number: **90308798.9**

(22) Date of filing: **09.08.90**

(51) Int. Cl.⁵: **B60P 7/08**

(30) Priority: **18.08.89 GB 8918853**

(43) Date of publication of application:
**20.02.91 Bulletin 91/08**

(84) Designated Contracting States:
**BE DE ES FR GB IT NL**

(71) Applicant: **PESCA ENGINEERING LTD.**
**Highfield Industrial Estate, Little Hulton**
**Worsley, Manchester M28 6ST(GB)**

(72) Inventor: **Dawson, John Bernard**
**16 Beacon Street, Lichfield**
**Staffordshire, WS13 7AD(GB)**

(74) Representative: **Pearce, Anthony Richmond et al**
**MARKS & CLERK Alpha Tower Suffolk Street**
**Queensway Birmingham B1 1TT(GB)**

(54) **Strap tensioning buckle.**

⑤ A strap tensioning buckle has a channel section body (10) with holes (12) at one end for anchoring to a strap or other securing member. A tensioning member (14) is mounted in the body (10) by a pivot pin (13). A strap (30) having a termination (32) engaged with a slot (25) in a portion of the tensioning member (14) projecting from the body (10), extends through the body (10) from the opposite end to the holes (12) around the pin (13), through a slot (17) in the tensioning member (14), back around the pin (13) and out through the opposite end of the body (10). The tensioning member (14) is retained in a closed position by a latch element (20) slidably mounted in the body (10) and used by a spring (22) into a locking position in which it locks the tensioning member (14) in the closed position.

FIG 1

## STRAP TENSIONING BUCKLE

This invention relates to a strap tensioning buckle particularly, though not exclusively, for tensioning straps holding the so-called side curtains of a road goods vehicle in position. One type of strap tensioning buckle comprises a channel-section body on which a strap tensioner is pivotally mounted. An over-centre action is provided to hold the tensioner in its closed or tensioning position. One of the problems with this type of buckle is that if the tensioner is not moved completely into its over centre position or if it is prevented from reaching its fully over-centre position, then it can fly open and thereby lead to an insecure side curtain. Another type of tensioner is the type wherein the tensioner is pivotally mounted on the channel-shaped body and held in position mechanically by a latch. The present invention relates to this latter type of tensioner which holds the tensioner in its closed or tensioning position in a more positive way than the over-centre type of tensioner.

In some types of buckle provided with a latch member, the latter is slidably mounted on the pivoted tensioner itself and engageable in slots in the sides of the channel-shaped body. These types are troublesome to operate and tend to snag and trap the strap in service. Another buckle of the latch type has the latch member pivotally mounted on the channel-section body itself and the arrangement is such that it automatically engages with the tensioner when the latter is closed. However, such a pivoted type of latch member can become inadvertently disengaged from the tensioner merely by pressing it inwardly.

An object of the present invention is to obviate or mitigate the above mentioned disadvantages.

According to the present invention there is provided a strap tensioning buckle comprising:-
a) a channel-section body having means adjacent one end thereof to enable a strap or other securing member to be anchored thereto;
b) a tensioning member pivotally mounted adjacent one of its ends by pivot means in the body so as to be pivotable between an open position in which an opposite end of the tensioning member projects outwardly from the body and a closed position in which said opposite end of the tensioning member is received in the body on the opposite side of the pivot means to said one end of the body, said tensioning member having an intermediate aperture therethrough to enable a strap to be passed along the body from the opposite end of the latter to said one end thereof, looped around the pivot means through the aperture and back around the pivot means to leave the body through said opposite end; and
c) a latch element mounted in the body between said pivot means and said opposite end of the body, said latch element being slidably mounted in the body to a limited extent for movement between a locking position in which it engages the tensioning member adjacent its opposite end when the latter is in its closed position and a releasing position in which it is disengaged from the tensioning member to allow the latter to pivot into its open position.

Most preferably, resilient means are provided for urging the latch element towards its locking position.

Conveniently, the tensioning member and the latch element are provided with mutually engageable formations which cause the latch element to engage and hold the tensioning member automatically when the latter is moved into its closed position.

Preferably, sliding movement of the latch member in the body is permitted by the provision of interengaging lugs and slots.

In a particularly convenient embodiment, the tensioning member has at least one flat thereon which is engageable with an internal surface of the body to limit pivotal movement of the tensioning member beyond its open position.

An embodiment of the present invention will now be described, by way of example, with reference to the accompanying drawings in which:-
Fig. 1 is a perspective front view of a strap tensioning buckle according to the present invention,
Fig. 2 is a rear perspective view of the strap tensioning buckle of Fig. 1 and,
Fig. 3 is a side view of the buckle of Figs. 1 and 2 showing how a strap to be tensioned is threaded around and through the various parts of the buckle.

Referring now to the drawings, the strap tensioning buckle comprises a channel-section body 10 formed of stainless steel. Adjacent one end 11 of the body 10, a slot 11 is provided to enable the buckle to be secured to a strap (not shown) which is looped around said one end of the body by being passed through the slot 11 and secured back on itself, eg by stitching riveting or the like. Said one end of the body 10 is also provided with a number of holes 12 therethrough to enable it to be secured to any other type of securing member.

At an intermediate location adjacent said one end, the body 10 is provided with a pivot pin 13 which extends between and is non-rotatably secured relative to the sides of the channel-section body 10.

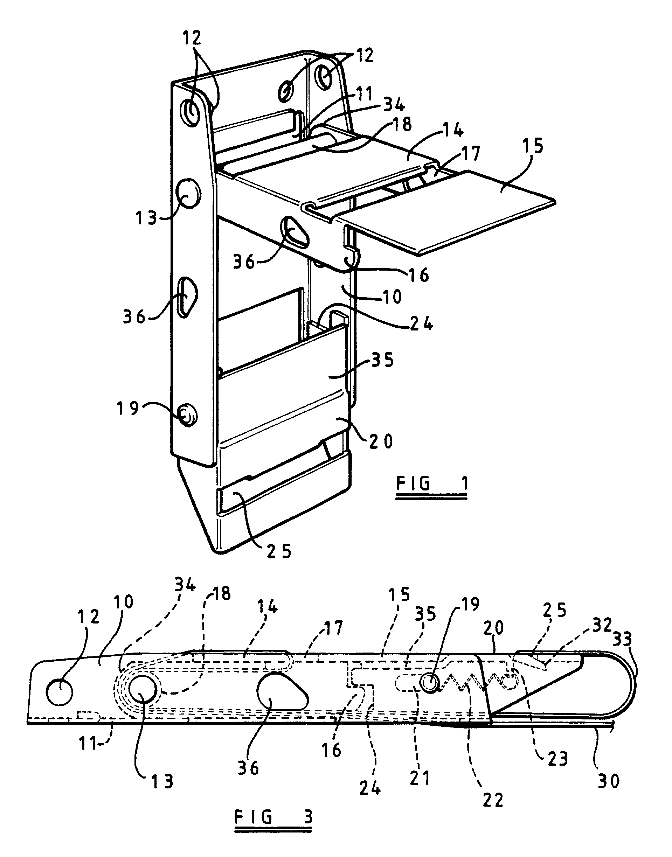

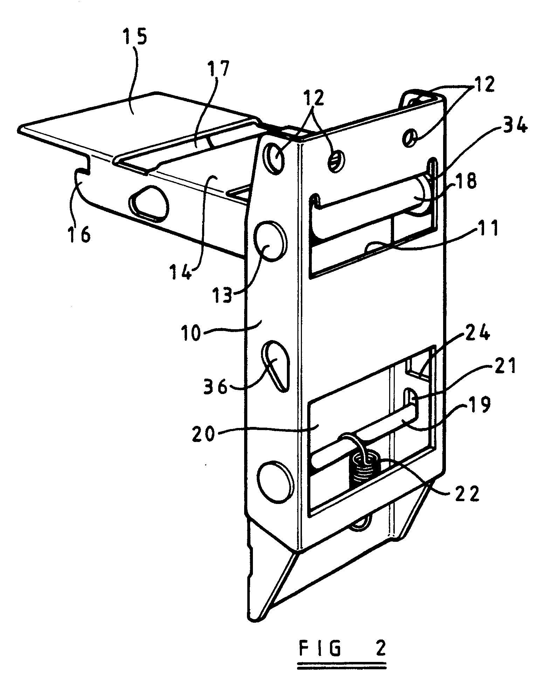

The buckle also comprises a tensioning member 14 which is of channel-section over part of its length. The sides of the tensioning member adjacent one of its ends have aligned holes in which the pivot pin 13 is received so that the tensioning member 14 can be pivoted about the axis of pivot pin 13 between a closed or tensioning position (Fig. 3) in which it is received completely within the body 10 and an open position (Figs. 1 and 2) in which it projects outwardly from the body 10. The free or non-pivoted end of the tensioning member 14 is formed as a flat plate 15 which projects beyond the sides of the channel-section portion of the tensioning member 14. The ends of the sides of the member 14 which are presented towards the plate 15 have hook formations 16. A slot 17 is formed in the major surface of the tensioning member 14 at a position which is spaced from the axis of pivot pin 13. A plastics sleeve 18 is provided on the pin 13 and extends between the sides of the channel-section member 14.

A pin 19 extends between and is secured to the sides of the channel-section body 10 adjacent the opposite end thereof, i.e. the end opposite to that at which the slot 11 and holes 12 are provided.

A channel-section latch element 20 has each side formed with an elongated slot 21 therein, the slots 21 being mutually aligned and extending in the longitudinal direction of the body 10. The pin 19 passes through both of the slots 21 so that the latch element 20 is slidable longitudinally of the body to an extent limited by the length of the slots 21. A tension spring 22 is connected at one end to the pin 19 and at the other end to an internal tongue 23 formed integrally with the latch element 20. The latch element 20 lies within the depth of the channel-section body 10 but projects from the opposite end of the latter. One or more springs 22 (only one shown) serve to urge the latch element 20 inwardly, i.e. towards the pivot pin 13. The sides of the latch element 20 are spaced apart by a distance equal to the spacing between the sides of the tensioning member 14 and are undercut at their ends 24 which are presented towards the hooked portions 16 of the tensioning member 14.

A transversely extending slot 25 is provided in that portion of the latch element 20 which projects from the body 10.

In use, the above-described strap tensioning buckle is anchored to a strap or other securing member as aforesaid at its end bearing the slot 11 and holes 12.

A strap 30 to be tensioned is provided with a termination 32 whereby it can be engaged with the slot 25. The strap 30 is loosely looped around the outer end of the latch member 20 and passes into the body 10 through the said opposite end of the latter. The strap 30 then passes around the plastics sleeve 18, along the underside of the tensioning member 14 to pass through the slot 17 and back around the plastic sleeve 18 before passing out through the same, opposite end of the body 10 to extend to a remote location (not shown) at which it is anchored. It will be appreciated that, when the tensioning member 14 is in the position illustrated in Figs. 1 and 2, the strap 30 will be relatively untensioned and will also be relatively loose so that it can be manually tensioned by tugging the portion 33 thereof which is looped loosely around the outer end of the latch element 20.

In this open position of the tensioning member 14, flats 34 on the sides of the tensioning member 14 abut against the base of the body 10 to act as stops to limit pivotal movement of the tensioning member beyond its open position. This is a relatively simple way of providing a stop without using projections on the body or on the tensioning member which might otherwise snag or damage the strap 30.

Once the strap 30 has been manually tensioned with the tensioning member 14 in its open position, the latter is pivoted into its closed position which is reached by the curved regions of the hook portion 16 engaging against the respective ends 24 of the latch element 20 so as to move the latter against the action of the spring 22. When the tensioning member 14 reaches its fully closed or tensioning position, the ends 24 have been cleared by the hooked portions 16 so that the latch element 20 is free to move under the action of the spring 22 into a position in which it retains the tensioning member 14 in its closed position. In this position, the tensioning member 14 lies wholly within the body 10, with the plate 15 lying against a shallow recessed portion 35 of the latch element 20, thus providing a pleasingly smooth appearance to the closed buckle.

When it is desired to release the tensioning in the strap, the portion 33 of the strap 30 is pulled in order to move the latch element 20 against the action of the spring 22 so that the ends 24 release the hooked portion 16. The tension in the remainder of the strap 30 causes the tensioning member 14 to move outwardly into its open position.

Aligned holes 36 are provided in the sides of the body 10 and the sides of the tensioning member 14 to receive a standard anti-tamper cable which is commonly used on goods vehicle side curtains to discourage tampering with the contents of the goods vehicle.

**Claims**

1. A strap tensioning buckle comprising:-

a) a channel-section body (10) having means (12) adjacent one end thereof to enable a strap or other securing member to be anchored thereto;

b) a tensioning member (14) pivotally mounted adjacent one of its ends by pivot means (13) in the body (10) so as to be pivotable between an open position in which an opposite end of the tensioning member (14) projects outwardly from the body and a closed position in which said opposite end of the tensioning member (14) is received in the body (10) on the opposite side of the pivot means (13) to said one end of the body (10), said tensioning member (14) having an intermediate aperture (17) therethrough to enable a strap to be passed along the body (10) from the opposite end of the latter to said one end thereof, looped around the pivot means (13) through the aperture (17) and back around the pivot means (13) to leave the body (10) through said opposite end; and

c) a latch element (20) mounted in the body (10) between said pivot means (13) and said opposite end of the body (10), said latch element (20) being slidably mounted in the body (10) to a limited extent for movement between a locking position in which it engages the tensioning member (14) adjacent its opposite end when the latter is in its closed position and a releasing position in which it is disengaged from the tensioning member (14) to allow the latter to pivot into its open position.

2. A buckle as claimed in claim 1, wherein resilient means (22) are provided for urging the latch element (20) towards its locking position.

3. A buckle as claimed in claim 1 or 2, wherein the tensioning member (14) and the latch element (20) are provided with mutually engageable formations (16 and 24) which cause the latch element (20) to engage and hold the tensioning member (14) automatically when the latter is moved into its closed position.

4. A buckle as claimed in any preceding claim, wherein sliding movement of the latch element (20) in the body (10) is permitted by the provision of interengaging lugs (19) and slots (21).

5. A buckle as claimed in any preceding claim, wherein the tensioning member (14) has at least one flat (34) thereon which is engageable with an internal surface of the body (10) to limit pivotal movement of the tensioning member (14) beyond its open position.

FIG 1

FIG 3

FIG 2

European
Patent Office

**EUROPEAN SEARCH
REPORT**

Application Number

**EP 90 30 8798**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | WO-A-8 400 712  (LINDBLAD ET AL.) <br> * The whole document * <br> _ _ _ | 1-4 | B 60 P 7/08 |
| X | GB-A-2 061 436  (ANCRA INTERNATIONAL) <br> * figures 1-3 * <br> _ _ _ | 1 | |
| X | GB-A-2 122 296  (GROOM) <br> * figures 1-5 * <br> _ _ _ _ _ | 1 | |
| | | | TECHNICAL FIELDS SEARCHED (Int. Cl.5) |
| | | | B 60 P |
| | The present search report has been drawn up for all claims | | |

| Place of search | Date of completion of search | Examiner |
|---|---|---|
| The Hague | 23 November 90 | LUDWIG H J |

CATEGORY OF CITED DOCUMENTS

X : particularly relevant if taken alone
Y : particularly relevant if combined with another
     document of the same catagory
A : technological background
O : non-written disclosure
P : intermediate document
T : theory or principle underlying the invention

E : earlier patent document, but published on, or after
     the filing date
D : document cited in the application
L : document cited for other reasons

&: member of the same patent family, corresponding
     document